Europäisches Patentamt

European Patent Office

Office européen des brevets

(11) Publication number: **0 123 364**
**B1**

(12) **EUROPEAN PATENT SPECIFICATION**

(45) Date of publication of patent specification: 02.08.89

(51) Int. Cl.⁴: **C 08 F 14/06,** C 08 F 2/20

(21) Application number: **84200581.1**

(22) Date of filing: **24.04.84**

(54) Vinyl chloride polymers.

(30) Priority: 26.04.83 NL 8301463

(43) Date of publication of application:
**31.10.84 Bulletin 84/44**

(45) Publication of the grant of the patent:
**02.08.89 Bulletin 89/31**

(84) Designated Contracting States:
**AT BE DE FR GB IT NL SE**

(56) References cited:
**EP-A-0 032 724**
**EP-A-0 033 577**

**CHEMICAL ABSTRACTS, vol. 91, no. 2, 9th July
1979, page 34, no. 5915r, Columbus, Ohio, US;
& JP - A - 79 03 187 (RYO-NICHI CO. LTD.)
11-01-1979**

(73) Proprietor: **STAMICARBON B.V.**
**Mijnweg 1**
**NL-6167 AC Geleen (NL)**

(72) Inventor: **Tuyt, Robert Corstiaan**
**Pastoor Creuzenplantsoen 9**
**NL-6231 EV Meerssen (NL)**
Inventor: **Evens, Georges Gerard**
**Oude Baan 716**
**B-3630 Maasmechelen (BE)**
Inventor: **Meyer, Peter Johan Nicolaas**
**Burg. Luytenstraat 31**
**NL-6151 GE Munstergeleen (NL)**
Inventor: **Pons, Dick Adriaan**
**Fazantstraat 55**
**NL-3145 CA Maassluis (NL)**

Courier Press, Leamington Spa, England.

## Description

The invention relates to a process for the suspension polymerization of vinyl chloride with monomer-soluble radical-forming initiators and possibly in the presence of suspending agents to form vinyl chloride polymers with at least 70% (wt) vinyl chloride units having good processing characteristics.

The suspension polymerization of vinyl chloride, optionally with monomers copolymerizable with it, is generally known and is carried out extensively on a technical scale. Liquid vinyl chloride is suspended in water and polymerized with monomer-soluble radical-forming initiators at temperatures between 30°C and 80°C. The polymerization takes place in the monomer drops. Customary initiators are lauryl peroxide, di(2-ethylhexyl)-peroxide dicarbonate, dialkylpercarbonates, particularly diisopropylpercarbonate, azo compound, particularly azo-bis-isobutyronitrile, sulphonyl peroxides, particularly acetylcyclohexane-sulphonyl peroxide.

Suspending agents are used to promote and to stabilize the distribution of monomer resp. monomers in the aqueous phase and to prevent the agglomeration of polymer particles during the polymerization. Customary suspending agents are gelatin, guar, gum arabic, cellulose derivatives, polyvinyl alcohols, polymeric suspending agents based on maleic acid or acrylic acid, for instance copolymers of maleic acid and vinyl acetate, xanthene gum, polyacrylamide and copolymers of acrylamide and other monomers.

It has been found that particle size, porosity and bulk density of the polymer, particularly of polyvinyl chloride, and consequently the processing characteristics, too, can be influenced by the choice of the suspending agents. Particularly vinyl chloride polymers incorporating plasticizers have been found to show a definite influence of the suspending agents used in the polymerization. For the take-up of plasticizers the polymer must have sufficient porosity. Usually the occurrence of so-called fish eyes, these are ungelled particles, is less frequent as the porosity increases.

Since the harmful properties of vinyl chloride are known, the requirements imposed for the removal thereof from the polymer have been increased continually. It has been found that the removal of vinyl chloride from the polymer is easier as the porosity increases.

High porosity of the polymer is usually accompanied by a low bulk density. It has been found, however, that with a given porosity the bulk density varies. As the bulk density increases, the processability, particularly the throughput in extruders, improves. Therefore, the preparation of vinyl chloride polymers is aimed at, for which reason the bulk density at a certain desired porosity is as high as possible.

Owing to the influence of the suspending agents on a range of polymer properties, the choice thereof is very important. Through the modification of suspending agents, an ever further improvement of the properties of the polymer to be prepared is aimed at.

It is known for this purpose to add to the customary primary suspending agent, which is understood to mean a water-soluble suspending agent, a secondary suspending agent, which is understood to mean a suspending agent that does not dissolve in water. The results obtained are then far better than those obtained when just the primary suspending agent is used.

Thus it is known from European patent specification 2861 that vinyl chloride polymers having a good porosity, a large BET surface, a narrow particle size distribution, few fish eyes in processing and good plasticizer take-up can be prepared by suspension polymerization of vinyl chloride, if so desired with monomers copolymerizable with it, with monomer-soluble radical-forming initiators, and in the presence of primary and secondary suspending agents by carrying out the polymerization in the presence of 0.005—0.5 part by weight of a primary suspending agent known per se per 100 parts by weight monomer and as secondary suspending agent 0.005—0.5 part by weight, per 100 parts by weight monomer, of a polyvinyl alcohol with a degree of polymerization of at least 250 and preferably at least 350 with a degree of solvolysis of 40—70 moles % with a narrow distribution of the degree of hydrolysis. The primary suspending agent used is preferably a polyvinyl alcohol with a degree of solvolysis of 70—90 moles %.

The said polyvinyl alcohols, which are characterized by, inter alia, a certain degree of solvolysis, and which are used as suspending agents, are prepared by solvolysis of polyvinyl acetate, because polyvinyl alcohol cannot be prepared direct by polymerization of vinyl alcohol, which is tautomeric with acetaldehyde. In an aqueous or alcoholic medium polyvinyl acetate can be converted into polyvinyl alcohol with an acid or an alkali as catalyst. During hydrolysis in an aqueous medium acetic acid and during alcoholysis in an alcoholic medium an acetic ester is released. The term solvolysis comprises both conversions. The solvolysis may be complete, but also incomplete. An incompletely solvolyzed polyvinyl alcohol can be regarded as a copolymer of vinyl acetate and vinyl alcohol, but is in practice called polyvinyl alcohol, with the degree of hydrolysis, or rather the degree of solvolysis, being mentioned.

The action of secondary suspending agents like polyvinyl alcohol with a degree of solvolysis of 40—70 moles %, preferably 50—60 moles %, and a narrow distribution of the degree of solvolysis, is explained in European patent specification 2861 from the suspicion that this secondary suspending agent is forced into the interface of the vinyl chloride monomer and the water, in consequence of which it has a favourable effect on the structure of the PVC to be formed.

Despite the good results achieved according to European patent specification 2861, the process described there shows a great disadvantage. The polyvinyl alcohol to be used as secondary suspending agent, having a degree of solvolysis of 40—70 moles %, more specifically 50—60 moles %, with a narrow distribution of the degree of solvolysis, is expensive owing to the necessarily complicated method of

EP 0 123 364 B1

preparation, viz. by solvolysis of polyvinyl acetate. A further disadvantage is that these secondary suspending agents can be obtained only in the form of an alcoholic (particularly methanolic) solution. This is a disadvantage for a number or reasons. With the secondary suspending agent a foreign substance (the alcohol) is thus introduced into the reaction mixture. Further, these alcoholic solutions are highly flammable, which involves high costs in transit and storage. Finally, the use of alcoholic solutions of secondary suspending agents causes yet another disadvantage. The PVC produced with these has a substantially lower volume resistance according to ASTM D 257 than PVC produced with just primary suspending agents.

In the process according to the invention these disadvantages are eliminated and a result is found even better than that according to European patent specification 2861, viz. a lower fish eye number as defined below and a far better volume resistance according to ASTM D 257. The invention relates to a process for preparing vinyl chloride polymers by suspension polymerization in a polymerization reactor of vinyl chloride, optionally in combination with at most 30% (wt) of one or more monomers copolymerizable therewith, with monomer-soluble radical-forming initiators and optionally in the presence of primary suspending agents in a quantity of preferably 0.005—0.5 part by weight primary suspending agent per 100 parts by weight monomer, characterized in that, before or during the polymerization, an aqueous dispersion is supplied to the polymerization reactor of at least one polyvinyl ester with a degree of solvolysis in respect of the dry substance lower than 70 moles %, preferably from 1—55 moles %, particularly from 1—25 moles %, and with an acid number in respect of the dry substance of preferably 2—50 mg KOH per gramme dry substance, particularly 5—35 mg KOH per gramme dry substance, which polyvinyl ester is chosen from the polymeric vinyl esters of one or more aliphatic and/or aromatic carboxylic acids with preferably 2—20 C atoms per molecule possibly copolymerized with one or more other monomers, preferably chosen from unsaturated mono and dicarboxylic acids, such as acrylic acid, methacrylic acid, crotonic acid, fumaric acid and itaconic acid, or the alkylesters with 2—20 C atoms of the acids mentioned hereabove, preferably acrylates, methacrylates, crotonates, fumarates, itaconates, maleates, laurates, versatates, or hydroxyalkylmonomers such as hydroxyethylacrylate and hydroxypropylacrylate, acrylamide, acrylamide derivatives, diacetone acrylamide, sulphonic acids and sulphonates, such as styrene sulphonic acid, sodium vinyl sulphonate and vinyl sulphonic acid, dienes such as butadiene, vinyl chloride and olefins with 1—20 C atoms per molecule such as ethylene, propylene and butene, with such a quantity of aqueous dispersion being added that, after this addition, the reaction mixture contains 0.01—0.5 part by weight of the polyvinyl ester per 100 parts by weight of the starting monomer.

Particularly suitable polyvinyl esters in the process according to the invention are polyvinyl acetate with an average degree of solvolysis of preferably 1—14 moles %, polyvinyl benzoate, polyvinyl propionate, copolymers of vinyl acetate with unsaturated monocarboxylic acids, particularly vinyl acetate-acrylic acid copolymers and vinyl acetate-crotonic acid copolymers, vinyl acetate-ethylene copolymers, vinyl acetate-vinyl versatate copolymers, vinyl acetate-vinyl laurate copolymers, vinyl acetate-maleate copolymers, vinyl acetate-acrylate copolymers, vinyl acetate-dibutyl fumarate copolymers, vinyl acetate-vinyl chloride-ethylene terpolymers and vinyl acetate-vinyl chloride-vinyl laurate terpolymers.

The polyvinyl esters used preferably have a molecular mass of 50,000—5,000,000.

The polyvinyl ester dispersons that are used in the process according to the invention are usually stabilized in a manner known to the person skilled in the art with one or more protective colloids such as, for instance, polyvinyl alcohols with a degree of solvolysis of 70—99 moles %, cellulose derivatives, particularly hydroxy ethyl celluloses, polyvinyl pyrrolidone, polyacrylamides, polyacrylic acid, polymethacrylic acid and/or anionogenic and/or nonionogenic emulsifiers such as laurylsulphates, alkylbenzenesulphates, polyethylene glycol esters, alkyl-aryl polyethylene glycol esters and ethylene glycol-propylene glycol copolymers.

Suitable percentages of the polyvinyl ester in respect of the whole of the dispersion are 1—75% (wt) and preferably 20—65% (wt), so to percentages higher than those of the secondary polyvinyl alcohol-in-methanol solutions known in the art.

Customary primary suspending agents are gelatin, polymeric suspending agents based on maleic acid or acrylic acid, for instance copolymers of maleic acid and vinyl acetate. Very suitable primary suspending agents are polyvinyl alcohols with a degree of solvolysis of 70 to 99 moles % and celluose derivatives, particularly hydroxypropyl cellulose, methylhydroxypropyl cellulose and hydroxymethyl cellulose. Very suitable also are mixtures of said polyvinyl alcohols and/or cellulose derivatives.

It is noted that it is known from European patent application 33577 to use polyvinyl acetate with a degree of solvolysis of 2—14 moles % instead of a secondary suspending agent in the suspension polymerization of vinyl chloride. This results in a good PVC. From this application, however, it is not known, nor suggested, in this suspension polymerization to use an aqueous dispersion of the specific composition described above instead of the traditional alcoholic solution.

The invention is further elucidated by the following non-restrictive examples and comparative experiments.

Example I

An enamelled autoclave of 100 l is filled with 26 kg vinyl chloride, 36.4 kg water, 15.6 g polyvinyl

3

alcohol with an average degree of solvolysis of 79 moles % and a degree of polymerization of 1700 and 26.0 g of an aqueous dispersion of 40 g of polyvinyl acetate in 100 g dispersion with a degree of solvolysis in respect of the dry substance of 9.2 moles % and an acid number in respect of the dry substance of 3.2 mg KOH per g dry substance, which dispersion is stabilized with water-soluble polyvinyl alcohol.

While being stirred, the whole of it is heated to about 330 K and is kept at this temperature until the pressure in the autoclave, which was about 950 kPa, falls to about 800 kPa. The pressure is subsequently relieved and the polymerization is stopped. After that the polyvinyl chloride is separated off from the suspension and dried. Of this polyvinyl chloride the average particle size, the porosity, the bulk density, the volume resistance and the dry blend time are determined.

The average particle size (d) is determined with the screen analysis method described by Rosin and Rammler in Kolloid Zeitschrift *67* (1934), pp. 16—26 and Chem. Ing. Techn., *24* (1942), pp. 25—31.

The porosity ($\varepsilon$) is determined according to the mercury intrusion method at a pressure of 12 MPa. L. A. de Wit and J. J. F. Scholten, J. Cat. *36* (1975), pp. 36—47, give a general exposition of the theory of this method and Guyer, Böhlen and Guyer, Helv. Chim. Acta *42* (1959), p. 2103, describe an apparatus for measuring the porosity according to this method.

The bulk density is determined according to ISO R 60.

The volume resistance is determined according to ASTM D 257.

The dry blend time is determined by putting 50 parts by weight dioctyl phthalate, 100 parts by weight PVC and 5 parts by weight lead stablizer in a Péchiney cup (described in ISO R 4574) and 23°C and subsequently bringing the contents of this Péchiney cup to 88°C and then determining the dry blend time in the manner described in ASTM D 2396—69.

For the polyvinyl chloride a d of 163 μm, an $\varepsilon$ of 0.27 m³/kg, a bulk density of 484 kg/m³, a volume resistance of $7 \times 10^{13}$ Ω cm and a dry blend time of 7.8 minutes are found.

## Example II

Vinyl chloride is polymerized in a manner similar to that described in example I, except that 39.0 g of the said aqueous dispersion is added.

In a manner similar to that described in example I, a d of 152 μm, an $\varepsilon$ of $0.29 \times 10^{-3}$ m³/kg, a bulk density of 452 kg/m³, a volume resistance of $7 \times 10^{13}$ Ω cm and a dry blend time of 6.8 minutes are found for the polyvinyl chloride.

## Example III

Vinyl chloride is polymerized in a manner similar to that described in example I, except that the aqueous dispersion added consists of 26.0 g of a dispersion of 40 g of a polyvinyl acetate in 100 g dispersion with a degree of solvolysis in respect of the dry substance of 12.0 moles %, which dispersion is stabilized with nonionogenic stabilizers and cellulose ether.

In a manner similar to that described in example I, a d of 127 μm, an $\varepsilon$ of $0.31 \times 10^{-3}$ m³/kg, a bulk density of 451 kg/m³, a volume resistance of $7 \times 10^{13}$ Ω cm and a dry blend time of 7.1 minutes are found for the polyvinyl chloride.

## Example IV

Vinyl chloride is polymerized in a manner similar to that of example III, except that 39.0 g of the said aqueous dispersion is added.

In a manner similar to that described in example I, a d of 139 μm, an $\varepsilon$ of $0.31 \times 10^{-3}$ m³/kg, a bulk density of 480 kg/m³, a volume resistance of $6 \times 10^{13}$ Ω cm and a dry blend time of 6.9 minutes are found for the polyvinyl chloride.

## Example V

Vinyl chloride is polymerized in a manner similar to that described in example I, except that the aqueous dispersion added consists of 20.8 g of a dispersion of 50 g of a copolymer of vinyl acetate with an unsaturated monocarboxylic acid in 100 g dispersion with a degree of solvolysis in respect of the dry substance of 1.3 moles % and with an acid number in respect of the dry substance of 28.5 mg KOH per g dry substance, which dispersion is stabilized with water-soluble polyvinyl alcohol.

In a manner similar to that described in example I, a d of 170 μm, an $\varepsilon$ of $0.26 \times 10^{-3}$ m³/kg, a bulk density of 509 kg/m³, a volume resistance of $10 \times 10^{13}$ Ω cm and a dry blend time of 7.0 minutes are found for the polyvinyl chloride.

## Example VI

Vinyl chloride is polymerized in a manner similar to that of example V, except that 31.2 g of the said aqueous dispersion is added.

In a manner similar to that described in example I, a d of 169 μm, an $\varepsilon$ of $0.26 \times 10^{-3}$ m³/kg, a bulk density of 507 kg/m³, a volume resistance of $10 \times 10^{13}$ Ω cm and a dry blend time of 6.6 minutes are found for the polyvinyl chloride.

# EP 0 123 364 B1

## Example VII

Vinyl chloride is polymerized in a manner similar to that described in example I, except that the aqueous dispersion added consists of 20.8 g of a dispersion of 50 g of a polyvinyl acetate in 100 g dispersion with a degree of solvolysis in respect of the dry substance of 6.5 moles % and with an acid number in respect of the dry substance of 2.2 mg KOH per g dry substance, which dispersion is stabilized with water-soluble polyvinyl alcohol.

In a manner similar to that described in example I, a d of 149 µm, an $\varepsilon$ of $0.25 \times 10^{-3}$ m$^3$/kg, a bulk density of 505 kg/m$^3$, a volume resistance of $10 \times 10^{13}$ $\Omega$ cm and a dry blend time of 6.6 minutes are found for the polyvinyl chloride.

## Example VIII

Vinyl chloride is polymerized in a manner similar to that described in example VII, except that 31.2 g of the said aqueous dispersion is added.

In a manner similar to that described in example I, a d of 137 µm, an $\varepsilon$ of $0.26 \times 10^{-3}$ m$^3$/kg, a bulk density of 467 kg/m$^3$, a volume resistance of $9 \times 10^{13}$ $\Omega$ cm and a dry blend time of 6.1 minutes are found for the polyvinyl chloride.

## Example IX

Vinyl chloride is polymerized in a manner similar to that described in example I, except that the aqueous dispersion added consists of 20.8 g of a dispersion of 50 g of a polyvinyl propionate in 100 g dispersion.

In a manner similar to that described in example I, a d of 149 µm, an $\varepsilon$ of $0.29 \times 10^{-3}$ m$^3$/kg, a bulk density of 440 kg/m$^3$, a volume resistance of $9 \times 10^{13}$ $\Omega$ cm and a dry blend time of 6.6 minutes are found for the polyvinyl chloride.

## Example X

Vinyl chloride is polymerized in a manner similar to that described in example IX, except that 31.2 g of the said aqueous dispersion is added.

In a manner similar to that described in example I, a d of 161 µm, an $\varepsilon$ of $0.27 \times 10^{-3}$ m$^3$/kg, a bulk density of 470 kg/m$^3$, a volume resistance of $8 \times 10^{13}$ $\Omega$ cm and a dry blend time of 6.9 minutes are found for the polyvinyl chloride.

## Example XI

Vinyl chloride is polymerized in a manner similar to that described in example I, except that the aqueous dispersion added consists of 20.8 g of a dispersion of 50 g of a polyvinyl acetate in 100 g dispersion, which dispersion is stabilized with water-soluble cellulose derivative.

In a manner similar to that described in example I, a d of 120 µm, an $\varepsilon$ of $0.30 \times 10^{-3}$ m$^3$/kg, a bulk density of 467 kg/m$^3$, a volume resistance of $7 \times 10^{13}$ $\Omega$ cm and a dry blend time of 6.4 minutes are found for the polyvinyl chloride.

## Example XII

Vinyl chloride is polymerized in a manner similar to that described in example XI, except that 31.2 g of the said aqueous dispersion is added.

In a manner similar to that described in example I, a d of 121 µm, an $\varepsilon$ of $0.30 \times 10^{-3}$ m$^3$/kg, a bulk density of 503 kg/m$^3$, a volume resistance of $8 \times 10^{13}$ $\Omega$ cm and a dry blend time of 6.7 minutes are found for the polyvinyl chloride.

## Example XIII

Vinyl chloride is polymerized in a manner similar to that described in example I, except that the aqueous dispersion added consists of 34.7 g of a dispersion of 50 g of a copolymer of vinyl acetate with crotonic acid in 100 g dispersion with a degree of solvolysis in respect of the dry substance of 1.3 moles % and with an acid number in respect of the dry substance, of 15.0 mg KOH per g dry substance, which dispersion is stabilized with water-soluble polyvinyl alcohol.

In a manner similar to that described in example I, a d of 153 µm, an $\varepsilon$ of $0.31 \times 10^{-3}$ m$^3$/kg, a bulk density of 447 kg/m$^3$, a volume resistance of $10 \times 10^{13}$ $\Omega$ cm and a dry blend time of 6.8 minutes are found for the polyvinyl chloride.

## Example XIV

Vinyl chloride is polymerized in a manner similar to that described in example I, except that the aqueous dispersion added consists of 34.7 g of a dispersion of 50 g of a copolymer of vinyl acetate with acrylic acid in 100 g dispersion with a degree of solvolysis in respect of the dry substance of 1.3 moles % and with an acid number in respect of the dry substance of 18.0 mg KOH per g dry substance, which dispersion is stabilized with water-soluble polyvinyl alcohol.

In a manner similar to that described in example I, a d of 158 µm, an $\varepsilon$ of $0.38 \times 10^{-3}$ m$^3$/kg, a bulk density of 458 kg/m$^3$, a volume resistance of $10 \times 10^{13}$ $\Omega$ cm and a dry blend time of 6.7 minutes are found for the polyvinyl chloride.

5

## Comparative experiment A

Vinyl chloride is polymerized in a manner similar to that described in example I, except that no aqueous dispersion is added.

In a manner similar to that described in example I, a d of 240 μm, an ε of 0.17 × 10⁻³ m³/kg, a bulk density of 535 kg/m³, a volume resistance of 8 × 10¹³ Ω cm and a dry blend time of 15.0 minutes are found for the polyvinyl chloride.

## Comparative experiment B

Vinyl chloride is polymerized in a manner similar to that described in example I, except that no aqueous dispersion is added, but 41.6 g of a solution in methanol of, per 100 g solution, 25 g of a polyvinyl alcohol with an average degree of solvolysis of 55 moles % and with a degree of polymerization of 580 and with a narrow distribution of the degree of solvolysis, i.e. a fraction of more than 80% (wt) has a degree of solvolysis of between 45 and 65 moles %.

In a manner similar to that described in example I, a d of 155 μm, an ε of 0.29 × 10⁻³ m³/kg, a bulk density of 490 kg/m³, a volume resistance of 3 × 10¹³ Ω cm and a dry blend time of 7.0 minutes are found for the polyvinyl chloride.

## Comparative experiment C

Vinyl chloride is polymerized in a manner similar to that described in example I, except that no aqueous dispersion is added, but 41.6 g of a solution in methanol of, per 100 g solution, 25 g of a polyvinyl alcohol with an average degree of solvolysis of 48 moles % (a product of the firm of Sigma commercially available under the name of Polivic S 202).

In a manner similar to that described in example I, a d of 155 μm, an ε of 0.29 × 10⁻³ m³/kg, a bulk density of 485 kg/m³, a volume resistance of 3 × 10¹³ Ω cm and a dry blend time of 7.0 minutes are found for the polyvinyl chloride.

The results of the examples and of the comparative experiments are shown in the table below. In this table the meaning of the figures is:

```
1   number of the example or of the comparative experiment

2:  d in μm

3:  ε in 10⁻³ m³/kg

4:  bulk density in kg/m³

5:  volume resistance in 10¹³ Ω cm

6:  dry blend time in minutes
```

| 1 | 2 | 3 | 4 | 5 | 6 |
|---|---|---|---|---|---|
| I | 163 | 0.27 | 484 | 7 | 7.8 |
| II | 152 | 0.29 | 452 | 7 | 6.8 |
| III | 127 | 0.31 | 451 | 7 | 7.1 |
| IV | 139 | 0.31 | 480 | 6 | 6.9 |
| V | 170 | 0.26 | 509 | 10 | 7.0 |
| VI | 169 | 0.26 | 507 | 10 | 6.6 |
| VII | 149 | 0.25 | 505 | 10 | 6.6 |
| VIII | 137 | 0.26 | 467 | 9 | 6.1 |
| IX | 149 | 0.29 | 440 | 9 | 6.6 |
| X | 161 | 0.27 | 470 | 8 | 6.9 |
| XI | 120 | 0.30 | 467 | 7 | 6.4 |

EP 0 123 364 B1

1  number of the example or of the comparative experiment

2:  d in $\mu m$

3:  $\epsilon$ in $10^{-3}$ $m^3/kg$

4:  bulk density in $kg/m^3$

5:  volume resistance in $10^{13}$ $\Omega$ cm

6:  dry blend time in minutes

| 1 | 2 | 3 | 4 | 5 | 6 |
|---|---|---|---|---|---|
| XII | 121 | 0.30 | 503 | 8 | 6.7 |
| XIII | 153 | 0.31 | 447 | 10 | 6.8 |
| XIV | 158 | 0.38 | 458 | 10 | 6.7 |
| A | 240 | 0.17 | 535 | 8 | 15.0 |
| B | 155 | 0.29 | 490 | 3 | 7.0 |
| C | 155 | 0.29 | 485 | 3 | 7.0 |

Furthermore, a number of experiments were made in which the number of fish eyes (fish eye number) was determined by gelling a composition with 100 parts by weight of PVC and 50 parts by weight dioctylphthalate on a roller at 150°C and, after the gelling, mixing it for 7 minutes more and subsequently making a film of 0.1 mm and counting the number of dots per 100 cm². These experiments show that the number of fish eyes in the products made according to the invention was 1 or 2, whereas in the products made according to the comparative experiments it ranged between 5 and 25.

**Claims**

1. Process for preparing vinyl chloride polymers by suspension polymerization in a polymerization reactor of vinyl chloride, optionally in combination with at most 30% (wt) of one or more monomers copolymerizable therewith, with monomer-soluble, radical-forming initiators and optionally in the presence of primary suspending agents, characterized in that before or during this polymerization an aqueous dispersion of at least one polyvinyl ester with a degree of solvolysis in respect of the dry substance lower than 70 moles % is fed to the polymerization reactor, which polyvinyl ester is chosen from the polymeric vinyl esters of aliphatic and/or aromatic carboxylic acids, the amount of the aqueous dispersion supplied being such that after this addition the reaction mixture contains 0.01—0.5 part by weight of the polyvinyl ester per 100 parts by weight of the starting monomer.

2. Process according to claim 1, characterized in that the polymeric vinyl esters of one or more aliphatic or aromatic carboxylic acids with 2—20 C-atoms per molecule are applied.

3. Process according to claim 1 or 2, characterized in that a polyvinyl ester dispersion with a degree of solvolysis of 1—55 moles % in respect of the dry substance is applied.

4. Process according to claim 3, characterized in that a polyvinyl ester dispersion with a degree of solvolysis of 1—25 moles % in respect of the dry substance is applied.

5. Process according to claim 4, characterized in that a polyvinyl ester dispersion with an acid number in respect of the dry substance of 1—50 mg KOH per g dry substance is applied.

6. Process according to claim 5, characterized in that a polyvinyl ester dispersion with an acid number in respect of the dry substance of 5—35 mg KOH per g dry substance is applied.

7. Process according to any one of claims 1—6, characterized in that the polyvinyl ester applied is polyvinyl acetate, polyvinyl benzoate and/or polyvinyl propionate.

8. Process according to claim 7, characterized in that the polyvinyl acetate applied is a polyvinyl acetate with an average degree of solvolysis of 1—14 moles %.

9. Process according to any one of claims 1—6, characterized in that the polyvinyl ester applied is a copolymer of vinyl acetate with an unsaturated monocarboxylic acid.

10. Process according to claim 9, characterized in that the unsaturated monocarboxylic acid applied is acrylic acid and/or crotonic acid.

7

# EP 0 123 364 B1

## Patentansprüche

1. Verfahren zum Herstellen von Vinylchloridpolymeren durch Suspensionspolymerisation von Vinylchlorid, gegebenenfalls in Kombination mit höchstens 30% (Gew.) eines oder mehrerer damit copolymerisierbarer Monomeren, mit monomerlöslichen radikalbildenden Initiatoren und gegenbenenfalls in Anwesenheit von primären Suspendiermitteln in einem Polymerisationsreaktor, dadurch gekennzeichnet, daß vor oder während dieser Polymerisation dem Polymerisationsreaktor eine wässerige Dispersion mindestens eines Polyvinylesters mit einem Solvolysegrad, bezogen auf die Trockensubstanz, von weniger als 70 Mol% zugeführt wird, welcher Polyvinylester aus den polymeren Vinylestern von aliphatischen und/oder aromatischen Carbonsäuren ausgewählt ist, wobei die Menge der zugeführten wässerigen Dispersion derart ist, daß nach diesem Zusatz die Reaktionsmischung 0,01 bis 0,5 Gew.Teile Polyvinylester pro 100 Gew.Teile Ausgangsmonomer enthält.

2. Verfahren nach Anspruch 1, dadurch gekennzeichnet, daß die polymeren Vinylester einer oder mehrerer aliphatischer oder aromatischer Carbonsäuren mit 2 bis 20 C-Atomen pro Molekül verwendet werden.

3. Verfahren nach Anspruch 1 oder 2, dadurch gekennzeichnet, daß eine Polyvinylesterdispersion mit einem Solvolysegrad von 1 bis 55 Mol%, bezogen auf die Trockensubstanz, verwendet wird.

4. Verfahren nach Anspruch 3, dadurch gekennzeichnet, daß eine Polyvinylesterdispersion mit einem Solvolysegrad von 1 bis 25 Mol%, bezogen auf die Trockensubstanz, verwendet wird.

5. Verfahren nach Anspruch 4, dadurch gekennzeichnet, daß eine Polyvinylesterdispersion mit einer Säurezahl, bezogen auf die Trockensubstanz, von 1 bis 50 mg KOH pro g Trockensubstanz verwendet wird.

6. Verfahren nach Anspruch 5, dadurch gekennzeichnet, daß eine Polyvinylesterdispersion mit einer Säurezahl, bezogen auf die Trockensubstanz, von 5 bis 35 mg KOH pro g Trockensubstanz verwendet wird.

7. Verfahren nach einem Ansprüche 1 bis 6, dadurch gekennzeichnet, daß der verwendete Polyvinylester Polyvinylacetat, Polyvinylbenzoat und/oder Polyvinylpropionat ist.

8. Verfahren nach Anspruch 7, dadurch gekennzeichnet, daß das verwendete Polyvinylacetat ein Polyvinylacetat mit einem mittleren Solvolysegrad von 1 bis 14 Mol% ist.

9. Verfahren nach einem der Ansprüche 1 bis 6, dadurch gekennzeichnet, daß der verwendete Polyvinylester ein Copolymer von Vinylacetat mit einer ungesättigten Monocarbonsäure ist.

10. Verfahren nach Anspruch 9, dadurch gekennzeichnet, daß die verwendete ungesättigte Monocarbonsäure Acrylsäure und/oder Crotonsäure ist.

## Revendications

1. Procédé de préparation de polymères de chlorure de vinyle par polymérisation en suspension dans un réacteur de polymérisation de chlorure de vinyle, facultativement en combinaison avec au plus 30% en poids d'un ou plusieurs monomères copolymérisables avec lui, avec des activants radicalaires solubles dans les monomères et, facultativement, en présence d'agents de suspension primaires, caractérisé en ce qu'avant ou pendant cette polymérisation, on introduit dans le réacteur de polymérisation une dispersion aqueuse d'au moins un ester de polyvinyle ayant un degré de solvolyse par rapport à la substance sèche plus faible que 70 moles%, cet ester polyvinylique étant choisi parmi les esters vinyliques polymères des acides carboxyliques aliphatiques et/ou aromatiques, la quantité de la dispersion aqueuse introduite étant telle qu'après cette addition, le mélange de réaction contienne de 0,01 à 0,5 partie en poids de l'ester polyvinylique par 100 parties en poids du monomère de départ.

2. Procédé selon la revendication 1, caractérisé en ce qu'on utilise les esters vinyliques polymères d'un ou plusieurs acide(s) carboxylique(s) aliphatique(s) ou aromatique(s) de 2 à 20 atomes de carbone par molécule.

3. Procédé selon la revendication 1 ou 2, caractérisé en ce qu'on utilise une dispersion d'esters polyvinyliques ayant un degré de solvolyse de 1 à 5 moles % par rapport à la substance sèche.

4. Procédé selon la revendication 3, caractérisé en ce qu'on utilise une dispersion d'esters polyvinyliques ayant un degré de solvolyse de 1 à 25 moles % par rapport à la substance sèche.

5. Procédé selon la revendication 4, caractérisé en ce qu'on applique une dispersion d'ester polyvinylique ayant un indice d'acide sur la substance sèche de 1 à 50 mg de KOH par g de substance sèche.

6. Procédé selon la revendication 5, caractérisé en ce qu'on utilise une dispersion d'ester polyvinylique ayant un indice d'acide par rapport à la substance sèche de 5 à 35 mg de KOH par g de substance sèche.

7. Procédé selon l'une quelconque des revendications 1 à 6, caractérisé en ce que l'ester polyvinylique utilisé est l'acétate de polyvinyle, le benzoate de polyvinyle et/ou le propionate de polyvinyle.

8. Procédé selon la revendication 7, caractérisé en ce que l'acétate de polyvinyle utilisé est un acétate de polyvinyle ayant un degré moyen de solvolyse de 1 à 14 moles %.

9. Procédé selon l'une quelconque des revendications 1 à 6, caractérisé en ce que l'ester polyvinylique utilisé est un copolymère d'acétate de vinyle avec un acide monocarboxylique insaturé.

10. Procédé selon la revendication 9, caractérisé en ce l'acide monocarboxylique utilisé est l'acide acrylique et/ou l'acide crotonique.